# EUROPÄISCHE PATENTSCHRIFT

(11) **EP 2 121 278 B1**
(45) Veröffentlichungstag und Bekanntmachung des Hinweises auf die Patenterteilung: **09.01.2019**
(21) Anmeldenummer: 07856031.5
(22) Anmeldetag: 27.11.2007
(51) Int. Cl.: B29C 45/28

(54) **ÜBERTRAGUNGSVORRICHTUNG FÜR EINE EINSPRITZDÜSE ZUR FÜHRUNG VON SCHMELZEMASSE IN EINER WERKZEUGFORM**
TRANSMISSION ELEMENT FOR AN INJECTION NOZZLE FOR GUIDING HOT-MELT PLASTIC WITHIN A MOLD
ELEMENT DE TRANSMISSION POUR UNE BUSE D'INJECTION SERVANT AU GUIDAGE D'UNE MASSE FONDUE DANS UN MOULE D'OUTILLAGE

(30) Priorität: 28.11.2006 DE 102006056435; 16.11.2007 DE 102007055069
(43) Veröffentlichungstag der Anmeldung: 25.11.2009
(73) Patentinhaber: HASCO Hasenclever GmbH + Co KG, 58513 Lüdenscheid (DE)
(72) Erfinder: DE BLASI, Salvatore, 58511 Lüdenscheid (DE)
(74) Vertreter: Roche, von Westernhagen & Ehresmann
(86) Internationale Anmeldenummer: PCT/DE2007/002137
(87) Internationale Veröffentlichungsnummer: WO 2008/064654

(56) Entgegenhaltungen:
- DE-C1- 19 955 320
- JP-A- 7 223 241
- JP-A- 8 174 605
- JP-A- 61 104 818
- JP-A- 2003 103 581

## Beschreibung

Die Erfindung betrifft zunächst eine Vorrichtung, umfassend eine Einspritzdüse zur Führung von Schmelzemasse in einer Werkzeugform, insbesondere einer Kunststoffspritzgießform, gemäß dem Oberbegriff des Anspruchs 11 sowie eine Übertragungsvorrichtung. Eine solche Einspritzdüse weist einen Düsenkern auf, welcher mit einem Schmelzekanal versehen ist. Durch den Schmelzekanal wird die aus dem Heißkanal kommende Schmelze über eine Einspritzöffnung direkt oder mittelbar dem Formhohlraum zugeleitet. Der Einspritzdüse ist eine Düsennadel zugeordnet, mittels welcher die Einspritzöffnung durch eine axiale Bewegung geöffnet oder verschlossen werden kann. Die Betätigung der Düsennadel erfolgt im Stand der Technik auf unterschiedliche Weise.

Außerdem betrifft die Erfindung eine Übertragungsvorrichtung für eine Einspritzdüse zur Führung von Schmelzemasse in einer Werkzeugform gemäß dem Oberbegriff des Anspruchs 1.

Aus der DE 195 16 491 A1 ist eine Einspritzdüse bekannt, bei welcher die Düsennadel in einem Düsengehäuse translatorisch hin und her bewegbar ist. Die Antriebsvorrichtung wird von einem Hydrozylinder gebildet. Ein hinterer Bereich der Düsennadel weist ein Aufnahmeelement mit einer schräg zur Längsachse verlaufenden Ausnehmung auf. In der Ausnehmung ist ein Schieber der Antriebsvorrichtung relativ zu dem Aufnahmeelement gleitbeweglich geführt. Der Endbereich des Schiebers ist in einem Winkel zur Längsachse eines antriebsseitigen Bereichs des Schiebers angeordnet. Die translatorische Bewegung des Schiebers kann auf diese Weise in eine anders gerichtete translatorische Bewegung der Düsennadel umgewandelt werden. Die Einspritzdüse gemäß der DE 195 16 491 A1 baut jedoch relativ groß und die Montage ist aufwändig.

Aus der DE 199 55 320 C1 ist eine Einspritzdüse bekannt, welche eine Umwandlungseinrichtung zur Umwandlung einer rotatorischen Bewegung in eine Axialbewegung der Düsennadel aufweist. Die Umwandlungsvorrichtung ist in eine Ausnehmung in der Aufspannplatte eingelassen. Der Antrieb erfolgt über eine Schneckenspindel, welche mit einem Abtriebszahnrad kämmt, das fest mit einem Hülsenelement verbunden ist. Das Hülsenelement ist von einem der Nadelspitze gegenüberliegenden Endbereich der Düsennadel durchgriffen. Der Endbereich weist diametral gegenüberliegend zwei Tastelemente auf, die in schlitzartigen Kulissenbahnen des Hülsenelements aufgenommen sind. Ferner weist das Nadelelement eine Verdrehsicherung auf.

Durch Bewegen der Schneckenspindel wird das Hülsenelement in Rotation versetzt, wobei sich die im Hülsenelement angeordneten Kulissenbahnen mitbewegen und die Tastelemente der Düsennadeln entsprechend der Ausbildung der Kulisse führen. Die Drehbewegung des Hülsenelements wird somit in eine translatorische Bewegung der Düsennadel umgesetzt. Auf diese Weise kann die Anschnittöffnung zu der Formhöhlung geöffnet und geschlossen werden, wobei die Charakteristik der Bewegung der Düsennadel von der Ausbildung der Kulisse bestimmt ist.

In der DE 196 11 880 A1 ist ein Spritzgießwerkzeug mit mehreren Einspritzdüsen beschrieben. Die Düsennadeln der Einspritzdüsen werden von einem Hydraulikzylinder mittels eines gabelförmigen Schiebers angetrieben. Der Schieber weist Nuten auf, die mit Führungsvorsprüngen von jeder Einspritzdüse zugeordneten Nadelträgerelementen zusammenwirken. Die Nadelträgerelemente sind als Hubkolben ausgebildet, wobei jeder Hubkolben in einer Führungsbuchse gleitgelagert ist, die in einer Ausnehmung der Formplatte befestigt ist. Der Hubkolben ist relativ zu der Fest an der Formplatte angeordneten Führungsbuchse beweglich.

In der WO 2006/054818 A1 ist eine Einspritzdüse beschrieben, wobei eine Düsennadel endseitig in einem Lagergehäuse gehalten ist. Ein Schieberelement der Antriebsvorrichtung ist mit einer Schrägfläche versehen, mittels welcher durch eine Bewegung des Schiebers eine Druckkraft auf die Düsennadel ausgeübt werden kann, so dass Letztere entgegen der Rückstellkraft eines Federelements zwischen einer die Schmelzeaustrittsöffnung freigebenden und einer die Schmelzeaustrittsöffnung verschließenden Position bewegbar ist.

Ausgehend von der WO 2006/054818 A1 liegt der Erfindung die Aufgabe zugrunde, eine Übertragungsvorrichtung für eine Einspritzdüse zu schaffen, wobei die Einspritzdüse mit Übertragungsvorrichtung insbesondere auch bei hoher Temperaturbelastung eine sichere Funktionsweise gewährleistet und hinsichtlich der Handhabbarkeit und der Herstellbarkeit weiter verbessert ist. Insbesondere war es Aufgabe eine Vorrichtung, umfassend eine Einspritzdüse und eine Übertragungsvorrichtung zu schaffen.

Die Aufgabe wird gemäß einem ersten Aspekt der Erfindung gelöst mit den Merkmalen des Anspruchs 1, insbesondere mit den kennzeichnenden Merkmalen.

Das Prinzip der Erfindung besteht im Wesentlichen darin, dass eine Übertragungseinrichtung für eine Einspritzdüse vorgesehen ist, mittels welcher eine Bewegungsübertragung von der Antriebsvorrichtung auf die Düsennadel möglich ist. Bei der Bewegungsübertragung kann es sich z.B. um eine Bewegungswandlung handeln. Sowohl die Richtung als auch die Art der Bewegung der Düsennadel und der Antriebsvorrichtung können sich unterscheiden. Bei der Bewegung der Antriebsvorrichtung kann es sich z.B. um eine lineare Bewegung in eine Richtung handeln während die Düsennadel eine lineare Bewegung in eine andere Richtung durchführt. Alternativ führt die Antriebsvorrichtung z.B. eine rotatorische Bewegung aus, während die Düsennadel eine lineare Bewegung vollzieht. Alternativ kann zwischen der Antriebsvorrichtung und der Düsennadel keine Bewe gungswandlung vorgesehen sein. Die Antriebsvorrichtung kann z.B. eine lineare Bewegung ausführen, die parallel zu der Bewegung der Düsennadel gerichtet ist.

Die Übertragungsvorrichtung ist einer lösbar mit der Einspritzdüse verbindbaren Anbaueinheit zugeordnet. Die Anbaueinheit kann z.B. ein Gehäuse umfassen. Die Anbaueinheit kann z.B. mittels einer Schraubverbindung an der Einspritzdüse oder einer Formplatte befestigt sein. Zwischen der Anbaueinheit und der Formplatte bzw. der Einspritzdüse findet keine Relativbewegung statt. Innerhalb der Anbaueinheit ist ein Gestänge wenigstens teilweise angeordnet. Das Gestänge kann z.B. von einem Bauteil gebildet sein. Alternativ kann das Gestänge z.B. von mehreren Bauteilen gebildet sein. Die Bauteile des Gestänges können beispielsweise starr oder gelenkig miteinander verbunden sein. Das Gestänge kann z.B. wenigstens teilweise innerhalb eines Gehäuses der Anbaueinheit angeordnet sein. Es ist somit möglich, das Gehäuse nach außen abzudichten. Eine Schmierung kann dann auf einfache Weise innerhalb des Gehäuses erfolgen. Eine Antriebsseite des Gestänges kann z.B. zur Verbindung mit der Antriebsvorrichtung außerhalb des Gehäuses angeordnet sein. Der nach außen geführte Teil des Gestänges kann bezüglich des Gehäuses abgedichtet sein, um zu verhindern, dass Schmiermittel aus dem Gehäuse nach außen gelangt. An einer Abtriebsseite ist das Gestänge zug- und druckfest mit der Düsennadel verbunden.

Ferner ist es möglich, innerhalb der Anbaueinheit eine Schmelzeführung vorzusehen. Es besteht dann die Möglichkeit, die Schmelze durch die Anbaueinheit hindurch zu der Einspritzdüse zu führen. An der Anbaueinheit kann eine Temperiervorrichtung, wie z.B. ein Heizelement, vorgesehen sein, um die Schmelze zu temperieren.

Der Vorteil der Erfindung besteht darin, dass die Übertragungseinrichtung mit dem Gehäuse auf einfache Weise von der Düse gelöst und mit anderen Düsen kombiniert werden kann. Außer dem Einbauraum für das Gehäuse sind an der Form keine Führungen notwendig. Die starre Befestigung der Düsennadel an dem Gestänge kann derart ausgebildet sein, dass ein einfaches Montieren und Demontieren der Düsennadel erfolgen kann. Ein Austausch der Düsennadel kann z.B. bei der Kombination der Antriebseinrichtung mit einer anderen Düse erforderlich sein.

Die Übertragungseinrichtung ist z.B. außerhalb des Gehäuses mit der Antriebsvorrichtung verbindbar. Z.B. kann ein erstes mit der Düsennadel bewegungsverbundenes Kupplungsteil mit einem zweiten mit der Antriebsvorrichtung bewegungsverbundenen Kupplungsteil zusammenwirken. Die Antriebsvorrichtung ist erfindungsgemäß besonders leicht zu handhaben, weil bei einer Demontage bzw. einer Montage auf diese Weise weniger Teile zu lösen bzw. zu befestigen sind.

Gemäß einer ersten Ausführungsform ist die Antriebsseite des Gestänges wenigstens teilweise außerhalb der Anbaueinheit angeordnet. Das Lösen und befestigen des Gehäuses von dem Düsenkern ist dann besonders einfach durchführbar, da das Gehäuse nicht geöffnet werden muss, um die Antriebsvorrichtung mit der Übertragungsvorrichtung zu verbinden. Der aus dem Gehäuse ragende Teilbereich der Übertragungsvorrichtung kann unmittelbar oder mittelbar mit der Düsennadel bewegungsverbunden sein. Ist er mittelbar bewegungsverbunden, kann z.B. zwischen dem Teilbereich und der Düsennadel ein Getriebe ausgebildet sein.

Gemäß einer ersten Ausführungsform ist die Übertragungseinrichtung von einer Bewegungswandlervorrichtung gebildet, mittels welcher die Bewegung der Antriebsvorrichtung in eine andere Bewegung der Düsennadel umwandelbar ist. Mittels der Wandlervorrichtung ist es möglich, die Bewegung der Antriebsvorrichtung in eine anders geartete bzw. anders gerichtete Bewegung der Düsennadel umzulenken. Z.B. kann eine kreisförmige Bewegung der Antriebsvorrichtung in eine lineare Bewegung der Düsennadel gewandelt werden. Alternativ kann z.B. eine lineare Bewegung in der Antriebsvorrichtung in eine anders gerichtete lineare Bewegung der Düsennadel umgelenkt werden.

Gemäß einer weiteren Ausführungsform ist in dem Gehäuse ein Schmelzekanal ausgebildet. Der Schmelzekanal kann die Schmelze z.B. von einer Öffnung im Heißkanal zu einem im Düsenkern vorgesehenen Schmelzekanal leiten. Alternativ kann die Schmelze z.B. direkt aus dem Einspritzzylinder in den Schmelzekanal des Gehäuses eingeleitet werden. Bei einem System unterschiedlicher Düsen kann z.B. der Schmelzekanal im Düsenkern derart angeordnet sein, dass eine Kombination der Übertragungseinrichtung mit allen einzelnen Düsen des Systems möglich ist.

Einer weiteren Ausführungsform gemäß ist der Schmelzekanal wenigstens bereichsweise von der Düsennadel und/oder der Übertragungseinrichtung beabstandet angeordnet. Die thermische Beeinflussung der Übertragungseinrichtung und der Düsennadel durch die Schmelzeführung ist verringert. Funktionsstörungen durch thermische Überlastung werden auf diese Weise verhindert. Z.B. ist die Düsennadel im Abstand vom Schmelzekanal zwischen Letzterem und einem Betätigungselement der Antriebsvorrichtung angeordnet.

Einer weiteren Ausgestaltung der Erfindung gemäß weist die Antriebsvorrichtung ein Antriebsgestänge auf. Mittels des Antriebsgestänges kann die Antriebsbewegung z.B. eines Motors oder eines hydraulischen oder pneumatischen Linearantriebs über eine Entfernung zur Antriebsvorrichtung weitergeleitet werden.

Einer weiteren Ausführungsform gemäß ist das Antriebsgestänge von einem translatorisch bewegbaren Schieber gebildet. Ein solcher Schieber kann auf einfache Weise in oder an der Form vorgesehen und montiert bzw. demontiert werden. Darüber hinaus gewährleistet der Schieber sicher eine Bewegungsübertragung von der Antriebsvorrichtung auf die Übertragungseinrichtung und ist wenig anfällig für Temperaturschwankungen.

Einer weiteren Ausführungsform gemäß weist die Übertragungseinrichtung einen zapfenartigen Kulissenstein auf, welcher in einer langloch- oder nutartigen Kulisse geführt ist. Mittels der Führung des Kulissensteins in der Kulisse ist es z.B. möglich, die Bewegung der Düsennadel zu steuern und eine Umlenkung der Bewegung der Antriebsvorrichtung in eine anders gerichtete Bewegung der Düsennadel vorzunehmen. Die Kulisse kann z.B. an einem Schieber angeformt oder angebracht sein. Der Steigungswinkel der Kulissenbahn im Verhältnis zu der Bewegungsachse des Betätigungselements bestimmt unter anderem die Bewegung der Düsennadel. Wenn es erforderlich ist, ist ein einfaches Ändern des Bewegungsverhaltens der Düsennadel möglich, indem der Kulissenstein in Eingriff mit einer anderen Kulisse mit anderer Steigung gebracht wird. Mittels des Kulissensteins ist es möglich, leichte Winkelversätze zwischen im Wesentlichen parallelen Bewegungen der Düsennadel und der Antriebsvorrichtung auszugleichen. Der Kulissenstein kann z.B. von einem zylindrischen Zapfen gebildet sein. Der Zapfen kann z.B. von einem metallischen Werkstoff gebildet sein.

Gemäß einer weiteren Ausführungsform ist der Kulissenstein wenigstens mittelbar der Düsennadel und die Kulisse der Antriebsvorrichtung zugeordnet. Die Kulisse kann einem Betätigungselement der Antriebsvorrichtung zugeordnet sein. Beispielsweise kann die Kulisse von dem Betätigungselement gebildet sein. Ein Ändern der Bewegungsumwandlung kann dann zum Beispiel durch Austauschen des Betätigungselements erfolgen.

Einer weiteren Ausgestaltung der Erfindung gemäß sind der Antriebsvorrichtung wenigstens zwei Kulissen zugeordnet, die wahlweise verwendbar sind. Die Kulissen können dann unterschiedlich ausgebildet sein. Insbesondere können die Kulissen unterschiedliche Steigungen aufweisen, so dass sich für die Düsennadel je nach Wahl der Kulisse unterschiedliche Bewegungscharakteristika ergeben. Der Antriebsvorrichtung können mehrere Kulissenführungen zugeordnet sein. Um eine andere Bewegungsumwandlung zu erhalten, braucht der Schieber dann lediglich demontiert und mit einer anderen Orientierung wieder montiert zu werden.

Einer weiteren Ausführungsform gemäß weist die Übertragungseinrichtung ein Halteelement auf, an welchem die Düsennadel kraft- und/oder formschlüssig, insbesondere lösbar, befestigbar ist. Das Halteelement, an welchem die Düsennadel fest gehalten ist kann derart ausgebildet sein, dass die Düsennadel auf einfache Weise gelöst und befestigt werden kann. Auf diese Weise kann die Übertragungseinrichtung leicht mit unterschiedlichen Düsen kombiniert werden, auch wenn dafür z.B. unterschiedliche Düsennadeln notwendig sind. Ein Befestigungskopf der Düsennadel kann z.B. zwischen einem Aufnahmeelement und einem Gegenelement angeordnet sein. Das Gegenelement kann beispielsweise an dem Aufnahmeelement verschraubt sein.

Einer weiteren Ausführungsform gemäß weist das Gehäuse wenigstens eine Zentrierbohrung auf, in welcher die Düsennadel gleitgelagert ist. Die Zentrierbohrung kann derart ausgebildet sein, dass bei Montage des Gehäuses am Düsenkern die Zentrierbohrung des Gehäuses mit einer weiteren Zentrierbohrung des Düsenkerns fluchtet.

Die Erfindung betrifft ferner ein Einspritzdüsensystem zur Führung von Schmelzemasse in einer Werkzeugform, .
wobei die Übertragungseinrichtung von einer separaten Anbaueinheit, z.B. umfassend ein Gehäuse, gehalten ist, welches mit unterschiedlichen Düsenkernen eines Einspritzdüsen-Systems kombinierbar ist.

Das erfindungsgemäße Einspritzdüsen-System hat den Vorteil, dass weniger Ersatzteile vorgehalten werden müssen, da eine Anbaueinheit mit einer daran gehaltenen Übertragungseinrichtung mit unterschiedlichen Düsenkernen, mit verschiedenen Eigenschaften, kombinierbar ist.

Darüber hinaus ist die Herstellung einfacher durchführbar, da für das Einspritzdüsen-System weniger Teile zu fertigen sind, als bei einer Vielzahl unterschiedlicher herkömmlicher Einspritzdüsen.

Instandhaltungsmaßnahmen sind leichter durchführbar, weil das Gehäuse mit der Übertragungseinrichtung insgesamt demontiert und wieder montiert werden kann.

Weitere Vorteile ergeben sich aus den nicht zitierten Unteransprüchen sowie anhand von in den Figuren dargestellten Ausführungsbeispielen. Es zeigen:
Fig. 1, eine schematische Schnittdarstellung der erfindungsgemäßen Einspritzdüse mit Anbaueinheit und Übertragungseinrichtung,
Fig. 2, eine schematische perspektivische Ansicht der Anbaueinheit mit Übertragungseinrichtung,
Fig. 3, in Anlehnung an Fig. 1 eine schematische Schnittdarstellung der Anbaueinheit,
Fig. 4, eine schematische Ansicht der Anbaueinheit mit Rohrheizkörper,
Fig. 5 in Anlehnung an Fig. 3 eine Schnittdarstellung der Anbaueinheit, wobei die Antriebsvorrichtung von einem Linearantrieb gebildet ist, welcher eine zur Düsennadel parallele Bewegung ausführt,
Fig. 6 eine schematische Darstellung der Antriebsvorrichtung gemäß Ansichtspfeil VI in Fig. 5, und
Fig. 7 in Anlehnung an Fig. 6 eine andere Ausführungsform der Antriebsvorrichtung.

Eine Einspritzdüse insgesamt wird in den Figuren mit der Bezugsziffer 10 bezeichnet. Soweit im Folgenden voneinander abweichende Ausführungsformen gezeigt sind, sind einander analoge Merkmale trotz körperlicher Abweichungen stets mit derselben Bezugsziffer versehen.

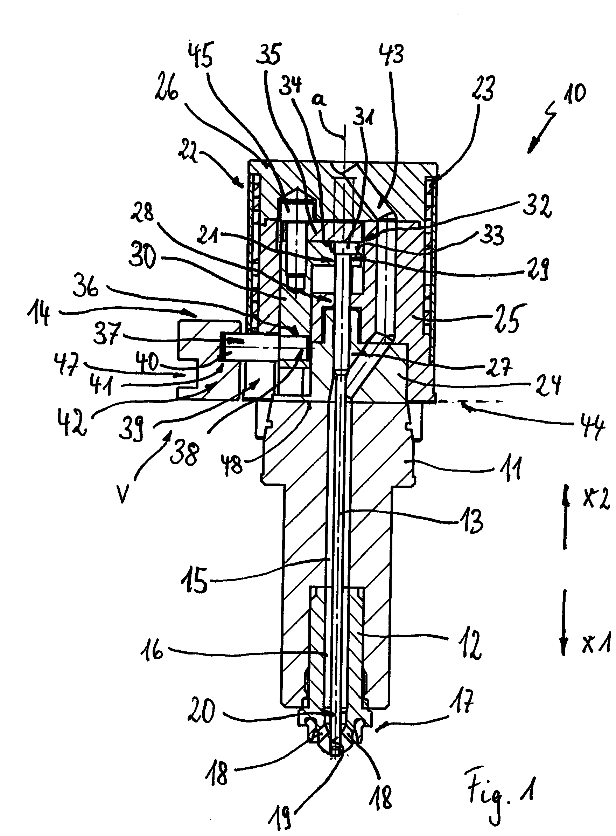

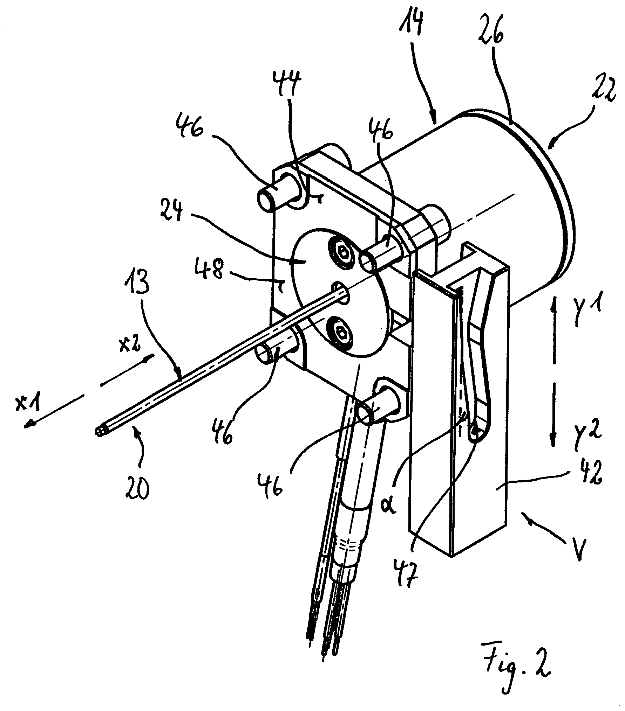

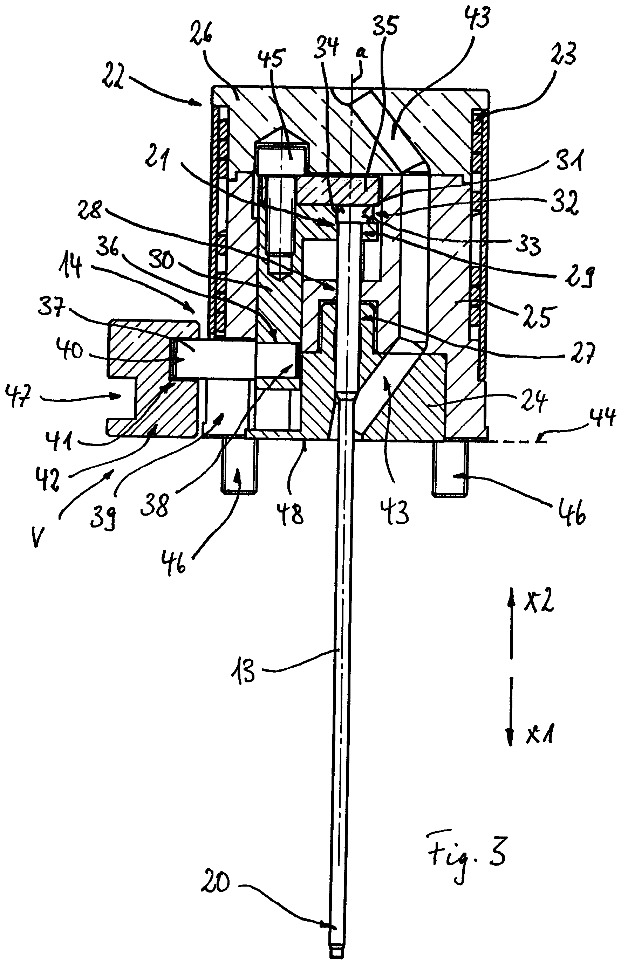

Eine solche Einspritzdüse 10 weist im Wesentlichen einen Düsenkern 11, eine Düsenspitze 12, eine Düsennadel 13 und eine Übertragungseinrichtung 14 auf. Mittels der Übertragungseinrichtung 14 gemäß der Fig. 1 bis 3 kann die Bewegungsrichtung y1, y2 (siehe Fig. 2) einer Antriebsvorrichtung V in die Bewegungsrichtung x1, x2 der Düsennadel 13 umgewandelt werden.

Der Düsenkern 11 ist gemäß Fig. 1 mit einem Schmelzekanal 15 versehen, welcher in einen Schmelzekanal 16 der Düsenspitze 12 mündet. Der Schmelzekanal 16 verzweigt sich an einem Endbereich 17 der Düsenspitze 12 in Zweigkanäle 18. Über die Zweigkanäle 18 kann die Kunststoffschmelze in einen nicht dargestellten kalottenartig ausgebildeten Vorraum gelangen, von welchem ein ebenfalls nicht dargestellter Schmelzedurchtrittskanal zum Formhohlraum abzweigt. Der Schmelzedurchtrittskanal kann mit der Düsennadel 13 verschlossen werden, indem eine Düsennadelspitze in den Schmelzedurchtrittskanal eintaucht. Wird die Düsennadel 13 aus dem Schmelzedurchtrittskanal herausbewegt, kann die Schmelze in den Formhohlraum gelangen.

In dem Endbereich 17 der Düsenspitze 12 ist zudem eine Bohrung 19 ausgebildet, in welcher ein Endbereich 20 der Düsennadel 13 geführt ist. Da der Endbereich 20 der Düsennadel 13 immer in der Bohrung 19 verbleibt, kann die Kunststoffschmelze die Bohrung 19 nicht passieren. Die Düsennadel 13 ist translatorisch entlang einer Längsachse a in die Richtungen x₁, x₂ bewegbar.

Ein dem Endbereich 20 gegenüberliegender Endbereich 21 der Düsennadel 13 ist in einem Gehäuse 22 gelagert. Das Gehäuse 22 ist von einer Heizung umgeben, die als gewendelter Rohrheizkörper 23 ausgebildet ist. Mittels des Rohrheizkörpers 23 kann das Gehäuse 22 temperiert werden.

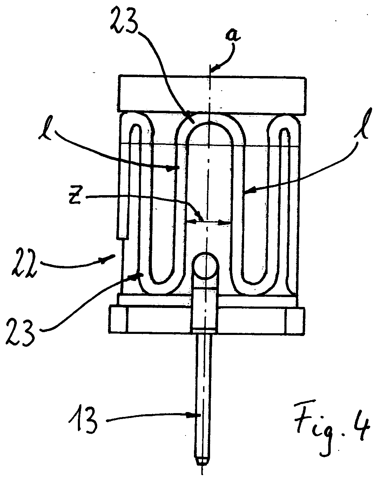

Alternativ zu der Darstellung gemäß der Fig. 1 bis 3 kann der Rohrheizkörper mäanderförmig am Umfang des Gehäuses 22 ausgebildet sein (siehe Fig. 4). Durch die Wahl des Abstandes z zwischen parallel zur Längsachse a verlaufenden Längsabschnitten I des Rohrheizkörpers 23 kann z.B. bestimmten Bereichen des Gehäuses 22 mehr Wärme zugeführt werden, als anderen Bereichen.

Der Endbereich 21 der Düsennadel 13 durchgreift gemäß Fig. 1 eine Zentrierbohrung 27 in einem Einsatzteil 24, eine Bohrung 28 in einem Aufnahmeteil 25 sowie eine Bohrung 29 eines Halteelements 30. In der Zentrierbohrung 27 ist die Düsennadel 13 gleitgeführt. In den Bohrungen 28 und 29 ist die Düsennadel 13 hingegen mit Spiel angeordnet.

Die Düsennadel 13 weist einen Mitnehmerkopf 31 auf, welcher in einer Ausnehmung 32 zwischen einer Anschlagfläche 33 des Halteteils 30 und einer Konterfläche 34 einer Konterplatte 35 angeordnet ist. Die Konterplatte 35 ist mittels einer Schraube 45 an dem Halteteil 30 befestigt. Die Ausnehmung 32 ist korrespondierend zum Mitnehmerkopf 31 der Düsennadel 13 derart ausgebildet, dass zwischen Halteteil 30 und Mitnehmerkopf 31 ein Formschluss besteht und die Düsennadel 13 auf diese Weise gegen Verdrehen um die Längsachse a gesichert ist.

Das Halteteil 30 weist eine andere Bohrung 36 auf, in welcher ein Pass-Stift 37 mit einem Endbereich 38 mit Presspassung fest angeordnet ist. Der Pass-Stift 37 durchgreift ein Langloch 39 in dem Aufnahmeteil 25. Die Einheit aus Pass-Stift 37, Halteteil 30, Konterplatte 35 und Düsennadel 13 sind derart in dem Gehäuse 22 geführt, dass eine Bewegung in den Richtungen x1, x2 möglich ist.

Mit einem anderen Endbereich 40 ist der Pass-Stift 37 in einer Kulisse 41 eines Schiebers 42 aufgenommen. Der Schieber 42 ist Teil der Antriebsvorrichtung V und kann z.B. von einem nicht dargestellten Hydraulikkolben bewegt sein. Der Schieber 42 ist translatorisch in die Richtungen y1, y2 bewegbar. Im Folgenden soll die Funktionsweise der Einspritzdüse erläutert werden:

Eine Bewegung des Schiebers 42 in eine der Richtungen y₁, y₂ (siehe Fig. 2) hat zur Folge, dass die im Schieber 42 nutartig ausgebildete Kulisse 41 den Pass-Stift 37, der in der Kulisse 41 und in dem Langloch 39 zwangsgeführt ist, in eine der Richtungen x₁, x₂ bewegt. Das Langloch 37 erlaubt lediglich eine Bewegung des Pass-Stifts 37 in eine der Richtungen x1, x2. Die Bewegungsgeschwindigkeit des Pass-Stiftes 37 hängt dabei von der Bewegungsgeschwindigkeit des Schiebers 42 sowie einer Steigung α der Kulisse 41 ab. Da der Pass-Stift 37 mit dem Halteteil 30 bewegungsverbunden ist, wird bei einer Bewegung des Pass-Stiftes 37 in eine der Richtungen x1, x2 auch das Halteteil in die entsprechende Richtung x₁ bzw. x₂ bewegt. Über den Mitnehmerkopf 31, welcher mit dem Schieber 30 bewegungsverbunden ist, führt die Düsennadel 13 ebenfalls eine Bewegung in die entsprechende Richtung x₁ bzw. x₂ aus.

In dem Einsatzteil 24, dem Aufnahmeteil 25 und einem Deckelteil 26 des Gehäuses 22 ist ein Schmelzekanal 43 ausgebildet. Der Schmelzekanal 43 verläuft beabstandet zu der Übertragungseinrichtung 14. In einer Flanschebene 44, in welcher eine untere Gehäusefläche 48 des Gehäuses 22 an dem Düsenkern 11 anliegt, mündet der Schmelzekanal 43 in den Schmelzekanal 15. Durch die von der Übertragungseinrichtung 14 und der Düsennadel 13 entfernte Schmelzeführung im Schmelzekanal 43 wird verhindert, dass die Funktionsfähigkeit der Düse 10, insbesondere der Düsennadel 13, durch thermische Belastung der Übertragungseinrichtung 14 funktionsunfähig wird.

Das Gehäuse 22 mit der Übertragungseinrichtung 14 ist mit unterschiedlichen Düsenkernen 11 kombinierbar. Durch Lösen von Flanschschrauben 46 (siehe Fig. 2) kann das Gehäuse 22 von einem nicht dargestellten Heißkanal getrennt und somit vom Düsenkern 11 gelöst werden. Instandhaltungsmaßnahmen sind auf diese Weise einfach möglich. Darüber hinaus kann das Gehäuse 22 mit der Übertragungseinrichtung 14 z.B. mit einem anderen Düsenkern 11 verbunden werden. Das Gehäuse 22 kann dafür derart ausgebildet sein, dass es mit unterschiedlichen Düsenkernen kombinierbar ist.

Gegebenenfalls ist für die Kombination mit einem anderen Düsenkern 11 lediglich eine andere Düsennadel 13 einzusetzen. Das Auswechseln der Düsennadel 13 ist auf einfache Weise möglich, indem zunächst ein Deckelteil 26 des Gehäuses 22 von dem Aufnahmeteil 25 gelöst wird. Anschließend kann die Schraube 45 gelöst und die Konterplatte 35 von dem Halteteil 30 entfernt werden. Die Düsennadel 13 ist daraufhin entnehmbar und kann gegen eine andere Düsennadel 13 ausgetauscht werden. Die Montage erfolgt in umgekehrter Reihenfolge.

Gemäß der Fig. 1 bis 3 weist der Schieber 42 außer der Kulisse 41 eine andere Kulisse 47 auf, die z.B. eine bezüglich der Kulisse 41 andere Steigung aufweisen kann. Durch Verdrehen des Schiebers 42 um 180° kann der Pass-Stift 37 in der Kulisse 47 angeordnet werden.

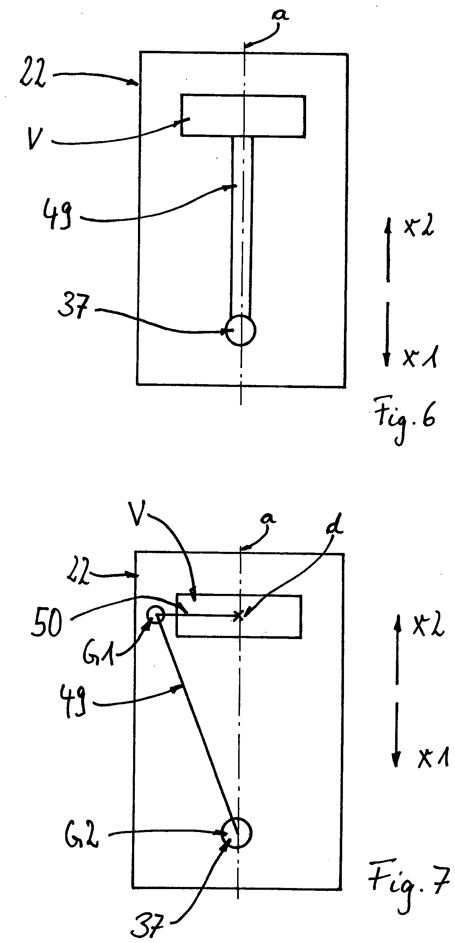

Alternativ zu den Ausführungsformen gemäß der Fig. 1 bis 3 kann die Antriebsvorrichtung V gemäß Fig. 7 eine Kurbel 50 aufweisen, welche um einen Drehpunkt d rotierbar ist. Ein Lenker 49 ist mittels des Gelenks G1 gelenkig an der Kurbel 50 befestigt und mittels eines Gelenks G2 gelenkig an dem Pass-Stift 37 befestigt. Da der Pass-Stift 37 zwangsgeführt ist, wird er von dem Lenker 49 in die Richtung x1 bzw. x2 bewegt. Das Gehäuse 22 sowie der Düsenkern 11 können bei dieser Ausführungsform entsprechend dem in den Fig. 1 bis 3 dargestellten Ausführungsbeispiel ausgebildet sein.

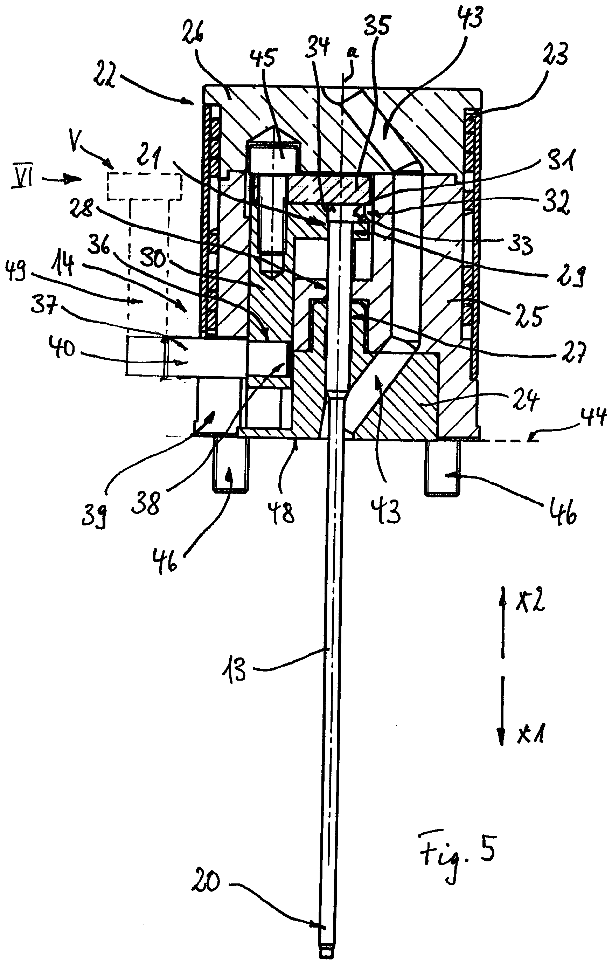

Darüber hinaus ist es nicht unbedingt erforderlich, dass eine Bewegungsumlenkung zwischen der Antriebsvorrichtung V und der Düsennadel 13 stattfindet. Alternativ zu den in den Fig. 1 bis 3 und 7 dargestellten Ausführungsformen kann die Antriebsvorrichtung V gemäß der Fig. 5 und 6 als Linearantrieb, z.B. als Hydrozylinder, ausgebildet sein. Die Antriebsvorrichtung V kann dann z.B. den Lenker 49 in die Richtungen x1 und x2 bewegen. Der Lenker 49 kann z.B. fest an dem Pass-Stift 37 angebracht sein, so dass Letzterer und damit auch die Düsennadel 13 in die Richtungen x1 und x2 bewegbar sind.

Auch bei den Ausführungsformen gemäß der Fig. 5 bis 7 kann das Gehäuse 22 mit unterschiedlichen Düsenkernen 11 verbindbar sein.

## Patentansprüche

1. Übertragungsvorrichtung (14) für eine Einspritzdüse zur Führung von Schmelzemasse in einer Werkzeugform, und wobei mittels der Übertragungsvorrichtung (14) eine Bewegung einer Antriebsvorrichtung (V) auf eine Bewegung einer Düsennadel (13) der Einspritzdüse übertragbar ist, wobei ein Gestänge (30, 37, 42) vorgesehen ist, welches an einer Antriebsseite mit der Antriebsvorrichtung (V) und an einer Abtriebsseite starr zug- und druckfest mit der Düsennadel (13) verbunden ist, **dadurch gekennzeichnet, dass** die Übertragungsvorrichtung (14) einer separaten, lösbar mit der Einspritzdüse verbindbaren Anbaueinheit (22) zugeordnet ist, in weicher das Gestänge wenigstens teilweise angeordnet ist, wobei die Anbaueinheit ein Gehäuse umfasst und Befestigungsmittel (46) umfasst, mittels welcher die Anbaueinheit an der Einspritzdüse oder an einer Formplatte lösbar befestigbar ist.

2. Übertragungsvorrichtung (14) nach Anspruch 1, **dadurch gekennzeichnet, dass** die Antriebsseite des Gestänges (30) wenigstens teilweise außerhalb der Anbaueinheit (22) angeordnet ist.

3. Übertragungsvorrichtung (14) nach Anspruch 1 oder 2, **dadurch gekennzeichnet, dass** die Übertragungsvorrichtung (14) von einer Bewegungswandlervorrichtung gebildet ist, mittels welcher die Bewegung (y1, y2) der Antriebsvorrichtung (V) in eine andere Bewegung (x1, x2) der Düsennadel (13) umwandelbar ist.

4. Übertragungsvorrichtung (14) nach einem der Ansprüche 1 bis 3, **dadurch gekennzeichnet, dass** in der Anbaueinheit (22) ein Schmelzekanal (43) ausgebildet ist.

5. Übertragungsvorrichtung (14) nach Anspruch 4, **dadurch gekennzeichnet, dass** der Schmelzekanal (43) wenigstens bereichsweise von der Düsennadel (13) und / oder der Übertragungseinrichtung (14) beabstandet angeordnet ist.

6. Übertragungsvorrichtung (14) nach einem der vorangehenden Ansprüche, **dadurch gekennzeichnet, dass** die Übertragungseinrichtung (14) einen zapfenartigen Kulissenstein (37) aufweist, welcher in einer langloch- oder nutartigen Kulisse (41) geführt ist.

7. Übertragungsvorrichtung (14) nach Anspruch 6, **dadurch gekennzeichnet, dass** der Kulissenstein (37) wenigstens mittelbar mit der Düsennadel (13) verbunden ist und dass die Kulisse (41) der Antriebsvorrichtung (V) zugeordnet ist.

8. Übertragungsvorrichtung (14) nach einem der vorangehenden Ansprüche, **dadurch gekennzeichnet, dass** das Gestänge ein Halteelement (30) aufweist, an welchem die Düsennadel (13) kraft- und / oder formschlüssig befestigbar ist.

9. Übertragungsvorrichtung (14) nach einem der vorangehenden Ansprüche, **dadurch gekennzeichnet, dass** die Düsennadel (13) lösbar an dem Gestänge (30) befestigbar ist.

10. Übertragungsvorrichtung (14) nach einem der vorangehenden Ansprüche, **dadurch gekennzeichnet, dass** das Gehäuse (22) wenigstens eine Zentrierbohrung (27) aufweist, in welcher die Düsennadel (13) gleitgelagert ist.

11. Vorrichtung umfassend eine Einspritzdüse zur Führung von Schmelzemasse in einer Werkzeugform, insbesondere einer Kunststoffspritzgießform, mit einem Düsengehäuse (11) und einer translatorisch beweglich gelagerte Düsennadel (13) zum Öffnen und Verschließen einer zu einem Formhohlraum führenden Schmelzeöffnung, wobei die Düsennadel (13) mit einer Antriebsvorrichtung (V) bewegbar ist ferner umfassend eine Übertragungsvorrichtung (V) gemäß einem der Ansprüche 1 bis 10, wobei der Antriebsvorrichtung (V) die Übertragungsvorrichtung (14) zugeordnet ist,-mittels welcher eine Bewegung der Antriebsvorrichtung (V) auf eine Bewegung der Düsennadel (13) übertragbar ist.

12. Vorrichtung nach Anspruch 11, **dadurch gekennzeichnet, dass** die Antriebsvorrichtung (V) ein Antriebsgestänge aufweist.

13. Vorrichtung nach Anspruch 12, **dadurch gekennzeichnet, dass** das Antriebsgestänge (42) einen translatorisch bewegbaren Schieber (42) umfasst.

14. Vorrichtung nach einem der Ansprüche 11 bis 13, soweit diese auf einen der Ansprüche 6 oder 7 rückbezogen sind, **dadurch gekennzeichnet, dass** der Antriebsvorrichtung (V) wenigstens zwei Kulissen (41, 47) zugeordnet sind, die wahlweise verwendbar sind.

## Claims

1. Transmission device (14) for an injection nozzle for guiding hot melt in a mould, and wherein a movement of a drive mechanism (V) can be converted by means of the transmission device (14) into a movement of a nozzle needle (13) of the injection nozzle, and a linkage (30, 37, 42) is provided which at an input end is connected to the drive mechanism (V) and at an output end is rigidly connected in a tension-resistant and compression-resistant manner to the nozzle needle (13), **characterised in that** the transmission device (14) is part of a separate add-on unit (22) in which the linkage is at least partially disposed which can be detachably connected to the injection nozzle, and the add-on unit comprises a housing and comprises fixing means (46) by means of which the add-on unit can be detachably attached to the injection nozzle or to a mould plate.

2. Transmission device (14) as claimed in claim 1, **characterised in that** the input end of the linkage (30) is disposed at least partially outside the add-on unit (22).

3. Transmission device (14) as claimed in claim 1 or 2, **characterised in that** the transmission device (14) is provided in the form of a motion converter device by means of which the movement (y1, y2) of the drive mechanism (V) can be converted into a different movement (x1, x2) of the nozzle needle (13).

4. Transmission device (14) as claimed in one of claims 1 to 3, **characterised in that** a melt passage (43) is provided in the add-on unit (22).

5. Transmission device (14) as claimed in claim 4, **characterised in that** the melt passage (43) is disposed in at least certain regions at a distance apart from the nozzle needle (13) and/or the transmission device (14).

6. Transmission device (14) as claimed in one of the preceding claims, **characterised in that** the transmission device (14) has a pin-type slide block (37) which is guided in a link (41) of the type having a slot or groove.

7. Transmission device (14) as claimed in claim 6, **characterised in that** the slide block (37) is at least indirectly connected to the nozzle needle (13) and the link (41) is part of the drive mechanism (V).

8. Transmission device (14) as claimed in one of the preceding claims, **characterised in that** the linkage has a retaining element (30) to which the nozzle needle (13) can be non-positively and/or positively attached.

9. Transmission device (14) as claimed in one of the preceding claims, **characterised in that** the nozzle needle (13) can be detachably attached to the linkage (30).

10. Transmission device (14) as claimed in one of the preceding claims, **characterised in that** the housing (22) has at least one centring bore (27) in which the nozzle needle (13) is mounted in a sliding arrangement.

11. Device comprising an injection nozzle for guiding hot melt in a mould, in particular a plastic injection mould, having a nozzle housing (11) and a nozzle needle (13) mounted so as to move in translation for opening and closing a melt opening leading to a mould cavity, the nozzle needle (13) being movable by means of a drive mechanism (V), further comprising a transmission device (V) as claimed in one of claims 1 to 10, the drive mechanism (V) being part of the transmission device (14) by means of which a movement of the drive mechanism (V) can be converted into a movement of the nozzle needle (13) .

12. Device as claimed in claim 11, **characterised in that** the drive mechanism (V) has a drive linkage.

13. Device as claimed in claim 12, **characterised in that** the drive linkage (42) comprises a slider (42) which can be moved in translation.

14. Device as claimed in one of claims 11 to 13, the latter being dependent on one of claims 6 or 7, **characterised in that** the drive mechanism (V) is provided with at least two links (41, 47) which can be used selectively.

## Revendications

1. Élément de transmission (14) pour une buse d'injection servant au guidage d'une masse fondue dans un moule d'outillage, et dans lequel un mouvement d'un dispositif d'entraînement (V) peut être transmis au moyen de l'élément de transmission (14) à un mouvement d'un pointeau (13) de la buse d'injection, dans lequel il est prévu une barre (30, 37, 42), qui est reliée sur un côté d'entraînement au dispositif d'entraînement (V) et sur un côté de sortie rigidement en traction et en compression au pointeau (13), **caractérisé en ce que** l'élément de transmission (14) est associé à une unité rapportée séparée (22), pouvant être assemblée de façon détachable à la buse d'injection, dans laquelle la barre est disposée au moins en partie, dans lequel l'unité rapportée comprend un boîtier et comprend des moyens de fixation (46), au moyen desquels l'unité rapportée peut être fixée de façon détachable à la buse d'injection ou à une plaque de moule.

2. Élément de transmission (14) selon la revendication 1, **caractérisé en ce que** le côté d'entraînement de la barre (30) est disposé au moins en partie à l'extérieur de l'unité rapportée (22).

3. Élément de transmission (14) selon la revendication 1 ou 2, **caractérisé en ce que** l'élément de transmission (14) est formé par un dispositif convertisseur de mouvement, au moyen duquel le mouvement (y1, y2) du dispositif d'entraînement (V) peut être converti en un autre mouvement (x1, x2) du pointeau (13).

4. Élément de transmission (14) selon l'une quelconque des revendications 1 à 3, **caractérisé en ce qu'**un canal pour masse fondue (43) est formé dans l'unité rapportée (22) .

5. Élément de transmission (14) selon la revendication 4, **caractérisé en ce que** le canal pour masse fondue (43) est disposé au moins localement à distance du pointeau (13) et/ou de l'élément de transmission (14).

6. Élément de transmission (14) selon l'une quelconque des revendications précédentes, **caractérisé en ce que** l'élément de transmission (14) présente un coulisseau de type tourillon (37), qui est guidé dans une coulisse (41) en forme de trou allongé ou de rainure.

7. Élément de transmission (14) selon la revendication 6, **caractérisé en ce que** le coulisseau (37) est relié au moins indirectement au pointeau (13) et **en ce que** la coulisse (41) est associée au dispositif d'entraînement (V) .

8. Élément de transmission (14) selon l'une quelconque des revendications précédentes, **caractérisé en ce que** la barre présente un élément de maintien (30), auquel le pointeau (13) peut être fixé par serrage et/ou par emboîtement.

9. Élément de transmission (14) selon l'une quelconque des revendications précédentes, **caractérisé en ce que** le pointeau (13) peut être fixé de façon détachable à la barre (30).

10. Élément de transmission (14) selon l'une quelconque des revendications précédentes, **caractérisé en ce que** le boîtier (22) présente au moins un trou de centrage (27), dans lequel le pointeau (13) est monté de façon coulissante.

11. Dispositif comprenant une buse d'injection servant au guidage d'une masse fondue dans un moule d'outillage, en particulier dans un moule de moulage par injection de matière plastique, avec un boîtier de buse (11) et un pointeau (13) monté en mouvement de translation pour l'ouverture et la fermeture d'une ouverture pour masse fondue menant à une cavité de moule, dans lequel le pointeau (13) est déplaçable avec un dispositif d'entraînement(V), et comprenant en outre un élément de transmission (14) selon l'une quelconque des revendications 1 à 10, dans lequel l'élément de transmission (14), au moyen duquel un mouvement du dispositif d'entraînement (V) peut être transmis à un mouvement du pointeau (13), est associé au dispositif d'entraînement (V).

12. Dispositif selon la revendication 11, **caractérisé en ce que** le dispositif d'entraînement (V) présente une barre d'entraînement.

13. Dispositif selon la revendication 12, **caractérisé en ce que** la barre d'entraînement (42) comprend un curseur déplaçable en translation (42).

14. Dispositif selon l'une quelconque des revendications 11 à 13, dans la mesure où celles-ci sont reliées à une des revendications 6 ou 7, **caractérisé en ce qu'**au moins deux coulisses (41, 47), qui sont utilisables au choix, sont associées au dispositif d'entraînement (V).
